# EUROPEAN PATENT SPECIFICATION

(11) **EP 3 222 535 B1**
(45) Date of publication and mention of the grant of the patent: **21.11.2018**
(21) Application number: 17162194.9
(22) Date of filing: 21.03.2017
(51) Int. Cl.: B65B 19/22, B65B 35/58, B65G 29/00, B65G 47/84, B65B 59/02

(54) **PACKAGING MACHINE AND WRAPPING METHOD FOR THE PRODUCTION OF A PACK OF TOBACCO ARTICLES**
VERPACKUNGSMASCHINE UND VERPACKUNGSVERFAHREN FÜR DIE HERSTELLUNG EINES PACKS VON TABAK ARTIKELN
MACHINE EMBALLAGE ET PROCEDE DE CONDITIONNEMENT POUR LA PRODUCTION D'UN PACK D'ARTICLES DE TABAC

(30) Priority: 21.03.2016 IT UA20161857
(43) Date of publication of application: 27.09.2017
(73) Proprietor: G.D SOCIETA' PER AZIONI, 40133 Bologna (IT)
(72) Inventor: MILANDRI, Francesco, 47023 CESENA (IT); RONZANI, Fabrizio, 40133 BOLOGNA (IT); TREBBI, Flavio, 40068 SAN LAZZARO DI SAVENA (IT); SQUARZONI, Michele, 44100 FERRARA (IT); FEDERICI, Luca, 40135 BOLOGNA (IT)
(74) Representative: Maccagnan, Matteo

(56) References cited:
- EP-A1- 0 842 853
- EP-A1- 2 366 637
- EP-A1- 2 450 282
- EP-A1- 2 726 376

## Description

### TECHNICAL FIELD

The present invention relates to a packaging machine and to a wrapping method for the production of a pack of tobacco articles. The present invention finds advantageous application to a pack of cigarettes, to which the following description will make explicit reference without the loss of generality.

### PRIOR ART

A pack of cigarettes normally comprises an inner wrapping, which is formed by a group of cigarettes wrapped in a wrap of metalized paper or heat sealable plastic material, and an outer container which houses the inner wrapping and can be of a soft type (namely formed by a flexible wrap which wraps the inner wrapping) or of a rigid type (namely formed by a cardboard rigid blank and generally provided with a hinged lid).

A known packaging machine for the production of a pack of cigarettes, for example as described in patent application EP2366637A1, comprises a forming unit, which forms the group of cigarettes, a first wrapping unit, which creates the inner wrapping around the group of cigarettes by folding a wrap, a second wrapping unit, which creates the outer container around the inner wrapping by folding a blank, and a feeding unit, which receives the inner wrapping from the first wrapping unit in an input station and releases the inner wrapping to the second wrapping unit in an output station. Normally, in the feeding unit, a collar is coupled to the inner wrapping which subsequently will be glued on the inside of a rigid container with hinged lid, which forms the outer container. Patent application EP2450282A1 also discloses a machine and a method according to the preamble of claims 1 and 16 respectively.

In a known packaging machine currently on the market a format change operation, to modify the type of pack of cigarettes being made normally, takes a very long time and requires the replacement of many components (hence it also entails a high cost). In addition, in most known packaging machines currently on the market too radical changes are not possible: for example, a known packaging machine currently on the market which creates an unsealed inner wrapping cannot be changed to create a sealed inner wrapping (and vice versa), or a known packaging machine currently on the market, which folds a longitudinally developed blank around an inner wrapping cannot be changed to fold a transversally developed blank around an inner wrapping.

### DESCRIPTION OF THE INVENTION

The object of the present invention is to provide a packaging machine and a wrapping method for the production of a pack of tobacco articles, which packaging machine and wrapping method are free from the drawbacks described above and are, at the same time, easy and inexpensive to manufacture.

According to the present invention a packaging machine and a wrapping method for the production of a pack of tobacco articles, as claimed in the appended claims are provided.

### BRIEF DESCRIPTION OF THE DRAWINGS

The present invention will now be described with reference to the accompanying drawings, which illustrate some examples of non-limiting embodiments, wherein:
Figure 1 is a front perspective view and in a closed configuration of a pack of cigarettes with hinged lid;
Figure 2 is a rear perspective view of the pack of cigarettes of Figure 1;
Figure 3 is a perspective view of a group of cigarettes contained in the pack of cigarettes of Figure 1;
Figure 4 is a front perspective view of a sealed inner wrapping contained in the pack of cigarettes of Figure 1;
Figure 5 is a rear perspective view of the sealed inner wrapping of Figure 4;
Figure 6 is a perspective view of a rigid reinforcement element surrounding the group of cigarettes of Figure 3 inside the sealed inner wrapping of Figure 4;
Figure 7 is a plan view of a flat wrap, which is folded around the group of cigarettes of Figure 3 to form the sealed inner wrapping of Figure 4;
Figure 8 is a front perspective view of an unsealed inner wrapping that can be contained in the pack of cigarettes of Figure 2 as an alternative to the sealed inner wrapping of Figure 4;
Figure 9 is a plan view of a flat wrap, which is folded around the group of cigarettes of Figure 3 to form the unsealed inner wrapping of Figure 8;
Figure 10 is a blank, which is folded around the sealed inner wrapping of Figure 4 or around the unsealed inner wrapping of Figure 8 to form an outer container of the pack of cigarettes of Figure 1;
Figure 11 is a collar that can be glued on the inside of the outer container of the pack of cigarettes of Figure 1;
Figure 12 is a perspective view of a packaging machine designed to produce the pack of cigarettes of Figure 1 containing, in a first operating configuration (illustrated in Figure 12), the sealed inner wrapping of Figure 4 or, alternatively and in a second operating configuration, the unsealed inner wrapping of Figure 8;
Figure 13 is a plan view of a feeding unit of the packaging machine of Figure 12 in the second operating configuration for feeding the unsealed inner wrapping of Figure 8;
Figure 14 is a plan view of the feeding unit of Figure 13 in the first operating configuration for feeding the sealed inner wrapping of Figure 4;
Figure 15 is a plan view of an alternative of the feeding unit of Figure 13 in the first operating configuration for feeding the sealed inner wrapping of Figure 4;
Figure 16 is a plan view of the feeding unit of Figure 15 in the second operating configuration for feeding the unsealed inner wrapping of Figure 8;
Figure 17 is a perspective view of the packaging machine of Figure 12 in the second operating configuration to produce the unsealed inner wrapping of Figure 8;
Figure 18 is an enlarged view of a detail of the packaging machine of Figure 12 in the first operating configuration to produce the sealed inner wrapping of Figure 4;
Figure 19 is an enlarged view of a detail of the packaging machine of Figure 17 in the second operating configuration to produce the unsealed inner wrapping of Figure 8;
Figure 20 is a front perspective view and in a closed configuration of an alternative embodiment of a pack of cigarettes with hinged lid;
Figure 21 is a front perspective view and in an open configuration of an outer container of the pack of cigarettes of Figure 20;

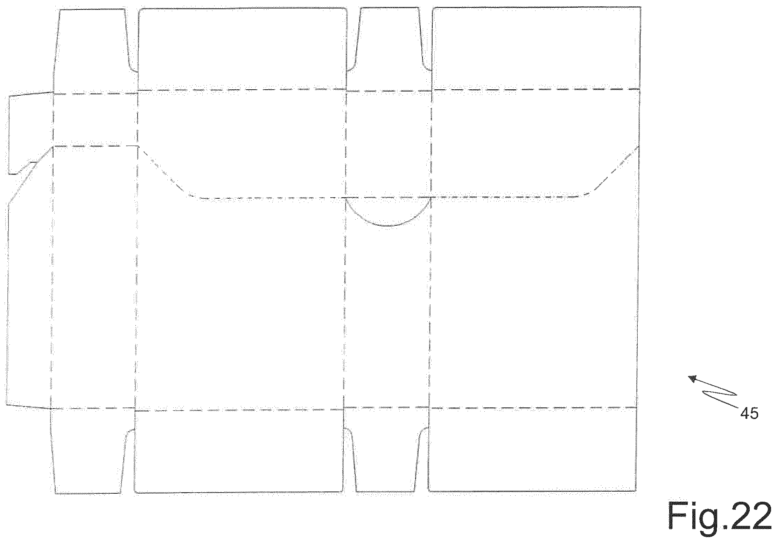

Figure 22 is a blank which is folded around the sealed inner wrapping of Figure 4 or to the unsealed inner wrapping of Figure 8 to form the outer container of the pack of cigarettes of Figure 20;
Figure 23 is a collar that can be glued on the inside the outer container of the pack of cigarettes of Figure 20;
Figure 24 is a plan view of a feeding unit of the packaging machine of Figure 12 in a third operating configuration to produce the pack of cigarettes of Figure 20.

### PREFERRED EMBODIMENTS OF THE INVENTION

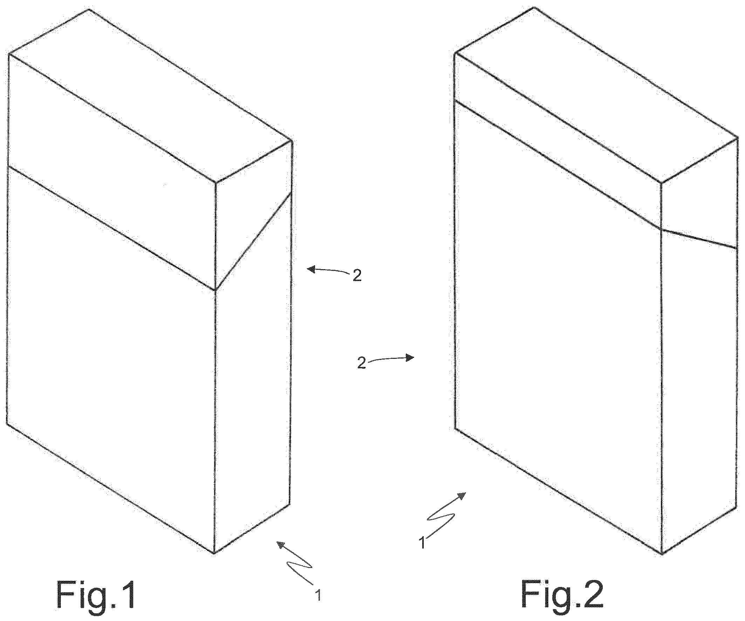

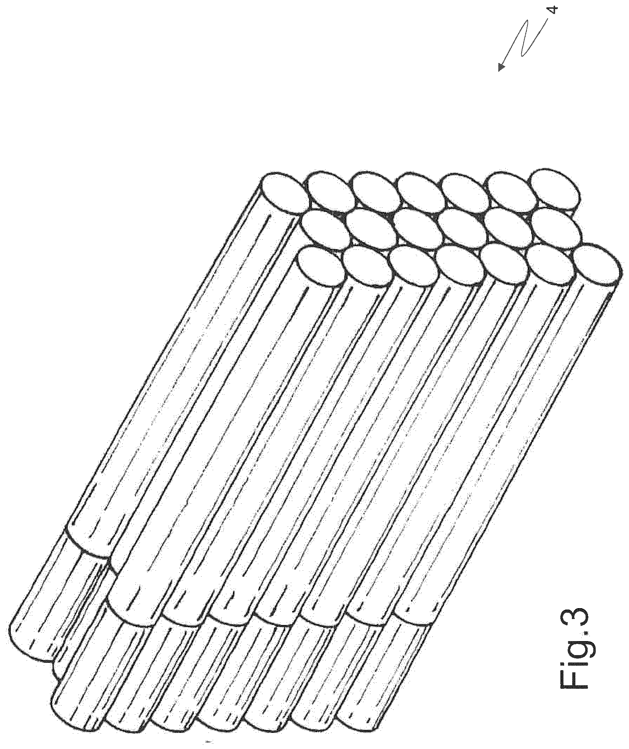

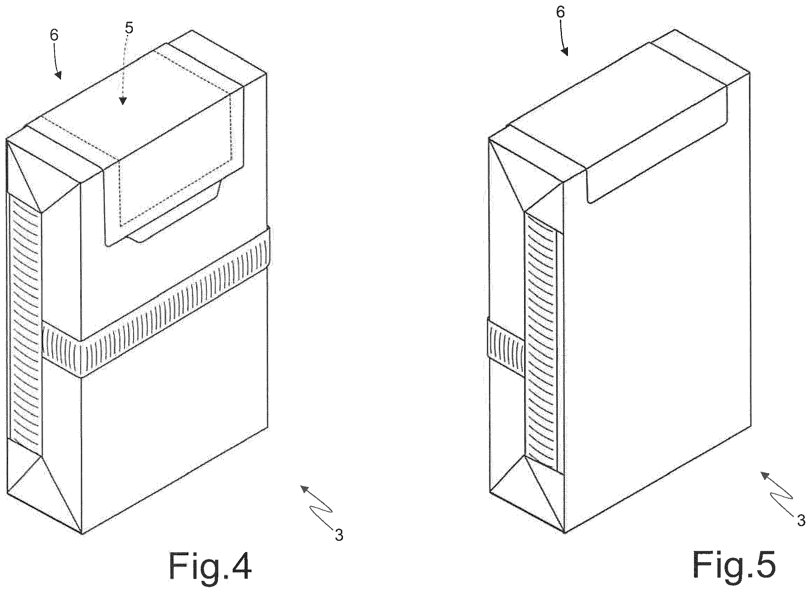

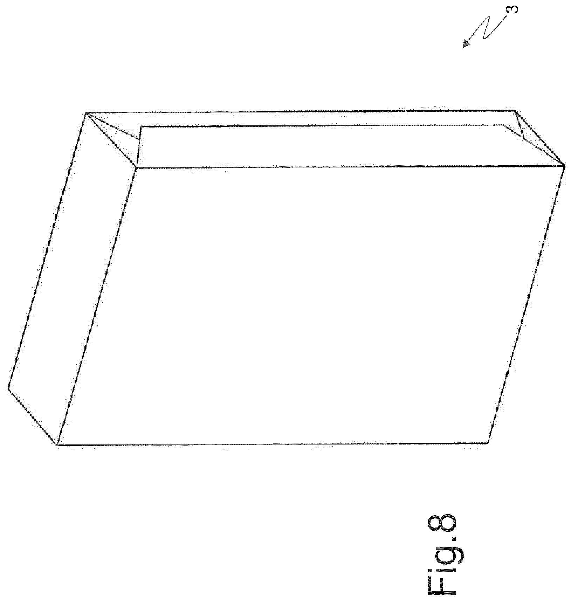

In Figures 1 and 2 number 1, denotes as a whole, a rigid pack of cigarettes. The pack 1 of cigarettes comprises a cup-shaped outer container 2 made of cardboard or rigid paperboard and an inner wrapping 3 (illustrated in Figures 4 and 5 or in Figure 8) which is housed inside the container 2 and encloses a parallelepiped shaped group 4 of cigarettes with filter (illustrated in Figure 3).

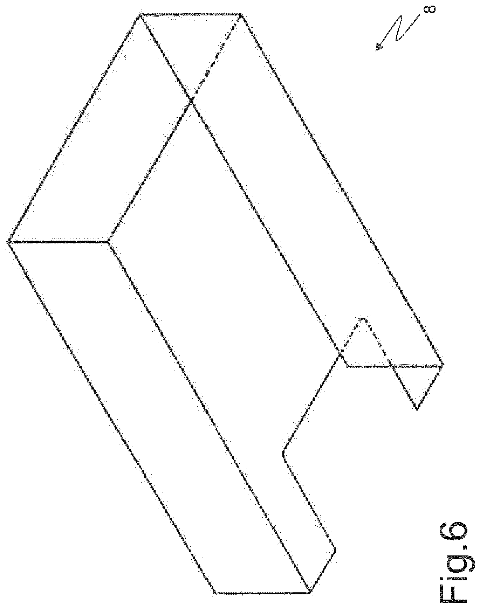

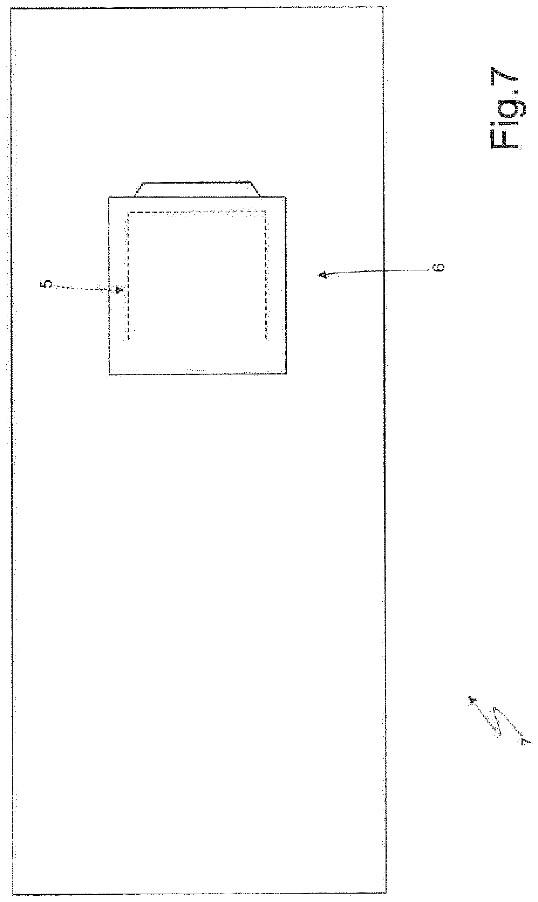

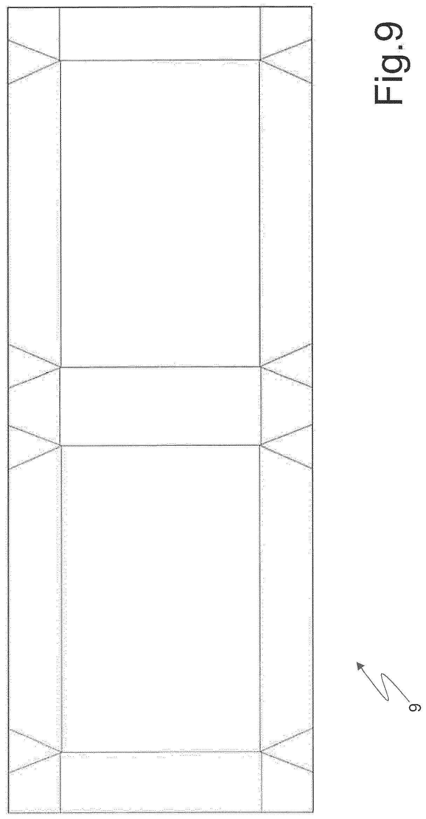

In the embodiment illustrated in Figures 4-7, the inner wrapping 3 is sealed and has, at the top and in front, a pull-out opening 5 for the cigarettes closed by a reusable closing label 6; the inner wrapping 3 is formed by using a heat-sealable wrap 7 (illustrated in Figure 7), which has a rectangular shape, is folded around the group 4 of cigarettes, and once folded is stabilized by means of heat sealing (namely overlapping portions of the wrap 7 are connected one to the other in a secure manner by means of heat sealing). Preferably (but not necessarily) around the group 4 of cigarettes a rigid reinforcement element (illustrated in Figure 6) is provided, which is, then, located inside the inner wrapping 3 (namely it is completely surrounded by the inner wrapping 3). In the alternative embodiment illustrated in Figures 8 and 9, the inner wrapping 3 is not sealed and is formed by folding a wrap 9 (illustrated in Figure 9) of metalized paper around the group 4 of cigarettes; once folded, the wrap 9 normally is not stabilized, namely, it is completely free from glue or sealing.

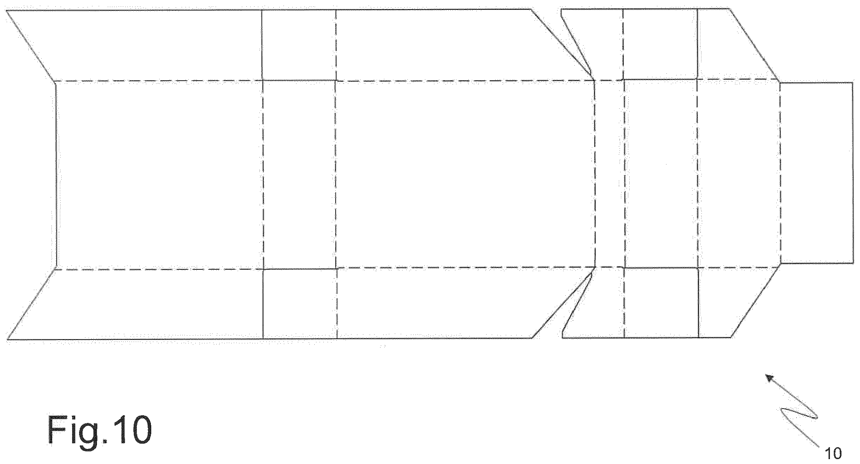

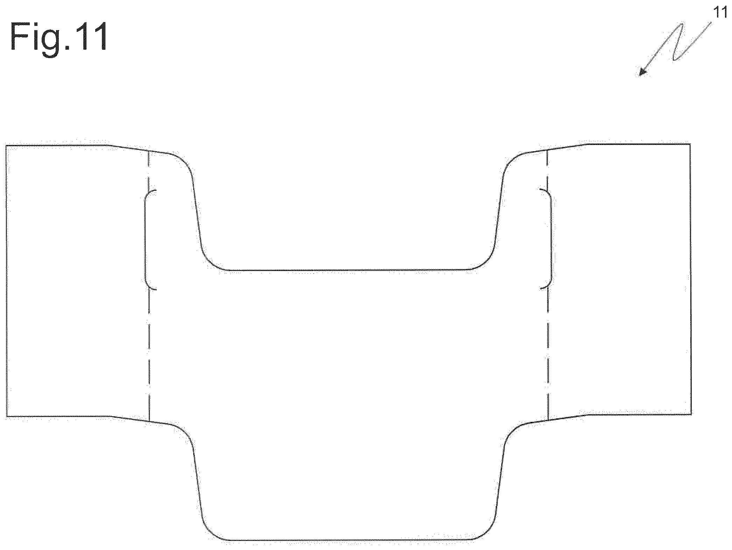

The outer container 2 of the pack 1 of cigarettes is obtained by folding a blank 10 (illustrated in Figure 10) around the inner wrapping 3 (of sealed type as illustrated in Figures 4-7 or unsealed type as illustrated in Figures 8 and 9). According to a possible embodiment, the pack 1 of cigarettes can comprise a collar 11 (illustrated flat in Figure 11) which is fixed (normally by means of gluing) U-folded inside of the outer container 2 so as to partially project outside of an upper open end and engage a corresponding inner surface of a lid when the lid 4 itself is arranged in a closing position. Generally, but not necessarily, the collar 11 is absent when the inner wrapping 3 is sealed (and hence it is provided with the reinforcing element 8, which partly also performs the function of the collar 11, on the inside thereof) and the collar 11 is present when inner wrapping 3 is unsealed.

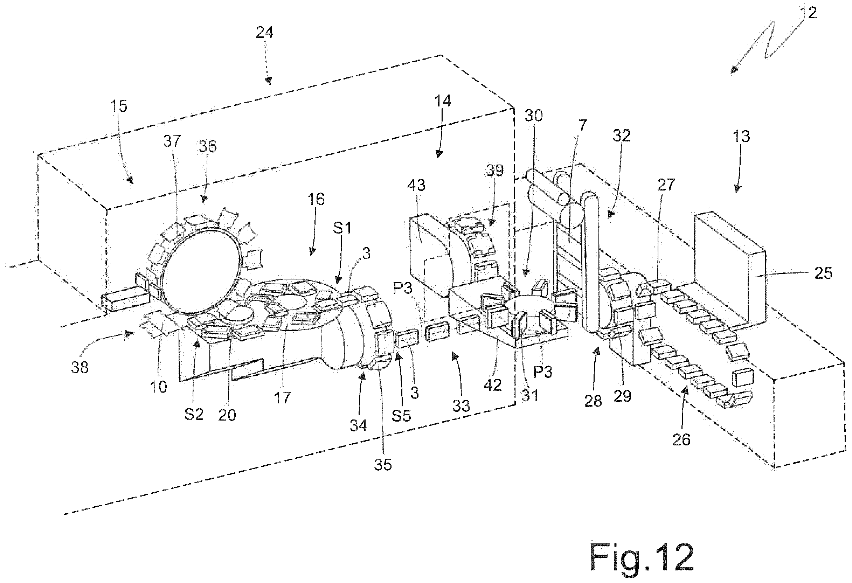

In Figure 12, reference number 12 denotes as a whole an intermittent packaging machine (namely actuated with an intermittent motion which provide a cyclic alternation of motion steps and standstill steps), which is designed to produce the pack 1 of cigarettes. The packaging machine 1 comprises a forming unit 13 of known type wherein the group 4 of cigarettes is formed, a wrapping unit 14 wherein the inner wrapping 3 is created by folding the wrap 7 (so as to form the inner wrapping 3 of sealed type) around the group 4 of cigarettes or by folding the wrap 9 (so as to form the inner wrapping 3 of unsealed type) around the group 4 of cigarettes, and a wrapping unit 15 of known type wherein the outer container 2 is created by folding the blank 10 around the inner wrapping 3. In addition, the packaging machine 1 comprises a feeding unit 16, which connects one to the other the wrapping units 14 and 15, namely receives the inner wrapping 3 from the wrapping unit 14 in an input station S1 and feeds the inner wrapping 3 to the wrapping unit 15 in an output station S2.

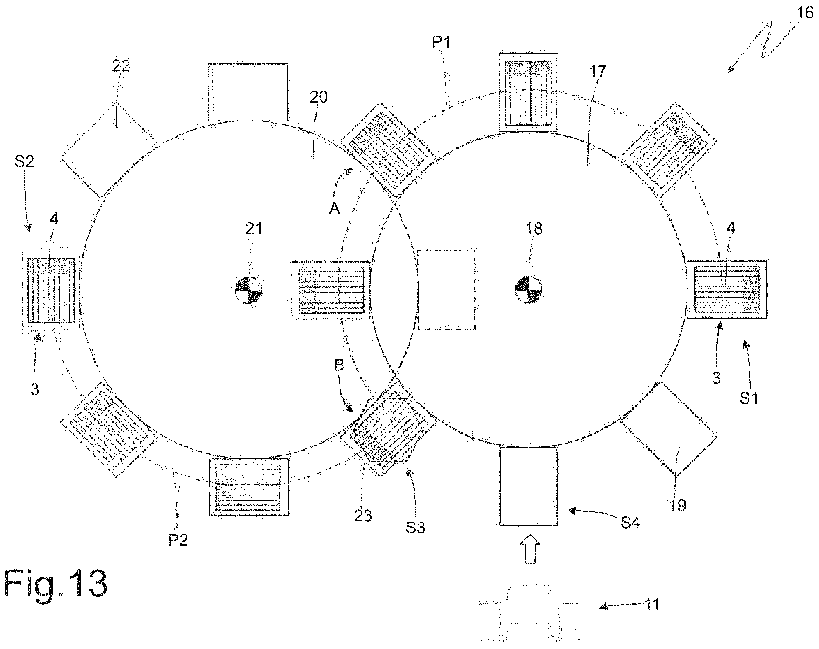

As illustrated in Figure 13, the feeding unit 16 comprises a horizontally arranged feeding wheel 17 which is mounted so as to rotate (with intermittent motion) around a vertical rotation axis 18 and supports a plurality of peripheral pockets 19, each of which is designed to contain an inner wrapping 3. The rotation of the feeding wheel 17 around the rotation axis 18 moves each pocket 19 along a circular feeding path P1, which starts from the input station S1, wherein the pocket 19 receives an inner wrapping 3 (containing a group 4 of cigarettes) from the wrapping unit 14, and ends in a transfer station S3, wherein the inner wrapping 3 is released.

As illustrated in Figure 13, the feeding unit 16 comprises a horizontally arranged feeding wheel 20 which is mounted so as to rotate (with intermittent motion) around a vertical rotation axis 21 (parallel to the rotation axis 18) and supports a plurality of peripheral pockets 22, each of which is designed to contain an inner wrapping 3. The rotation of the feeding wheel 20 around the rotation axis 21 moves each pocket 22 along a circular feeding path P2 that starts from the transfer station S3, wherein the pocket 22 receives an inner wrapping 3 (containing a group 4 of cigarettes) from a pocket 19 of the feeding wheel 17, and ends in the output station S2 where the inner wrapping 3 is released to the wrapping unit 15.

According to a preferred embodiment illustrated in the accompanying figures, the feeding unit 16 further comprises a feeding station S4 wherein a collar 11 is fed to each pocket 19 of the feeding wheel 17 upstream of the input station S1 (namely when the pocket 19 is still "*empty*", i.e. without the inner wrapping 3) so that, in the input station S1, the inner wrapping 3 (containing a group 4 of cigarettes) by entering into the pocket 19 of the feeding wheel 17 would couple to the collar 11, previously fed. Of course, in the transfer station S3, each inner wrapping 3 (containing a group 4 of cigarettes) is transferred from a pocket 19 of the feeding wheel 17 to a pocket 22 of the feeding wheel 20 together with the corresponding collar 11. According to a possible embodiment, each collar 11 is "U"-folded in the feeding station S4 as it enters the pocket 19 of the feeding wheel 17; alternatively, each collar 11 remains flat in the feeding station S4 and is "U"-folded around the inner wrapping 3 (containing a group 4 of cigarettes) in the input station S1 when the inner wrapping 3 enters the pocket 19 of the feeding wheel 17, or each collar 11 remains flat in the feeding station S4 and in the input station S1 and is "U"-folded around the inner wrapping 3 (containing a group 4 of cigarettes) in the transfer station S3 when the inner wrapping 3 enters the pocket 22 of the feeding wheel 20.

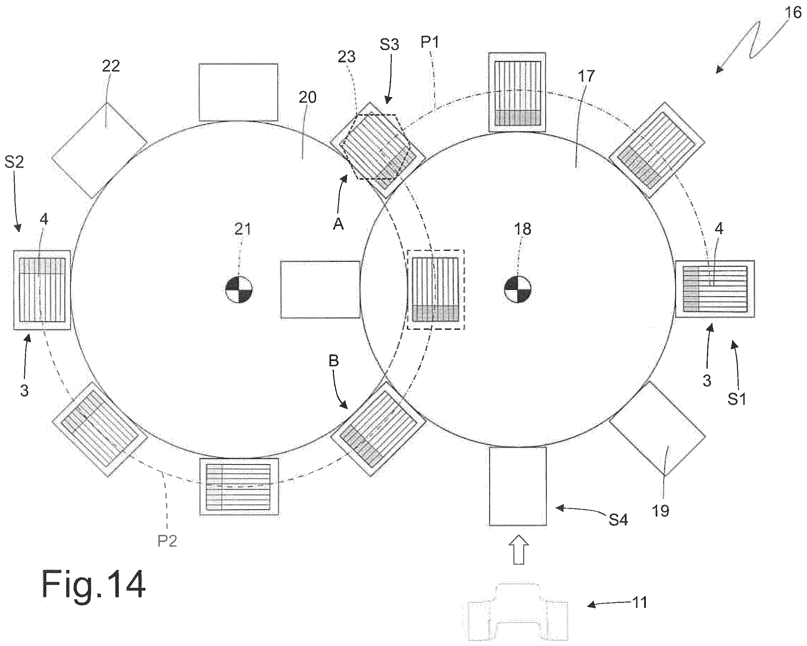

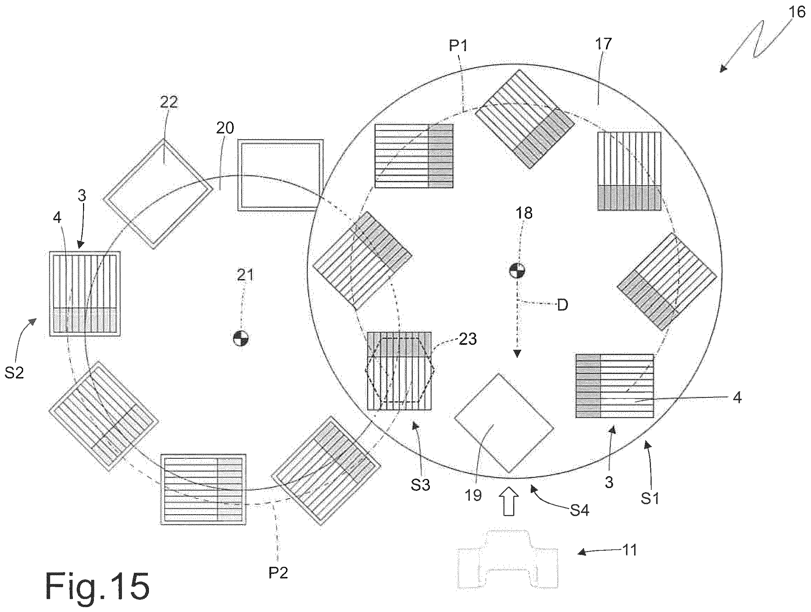

In the transfer station S3, a transfer device 23 is arranged which transfers each inner wrapping 3 (containing a group 4 of cigarettes) from the respective pocket 19 of the feeding wheel 17 to the respective pocket 22 of the feeding wheel 20. The transfer device 23 is of a known type and can comprise, as an example, a pusher and a counter-pusher, which are arranged on opposite sides of the inner wrapping 3, hold (clamp) the inner wrapping 3 together by engaging two opposite faces of the inner wrapping 3 and move vertically the inner wrapping 3 of the respective pocket 19 of the feeding wheel 17 to the respective pocket 22 of the feeding wheel 20. Obviously, the transfer station S3 (and hence the corresponding transfer device 23) can only be arranged in an exchange position A or B wherein a pocket 19 of the feeding wheel 17 is aligned (in particular, vertically aligned in the embodiment illustrated in the attached figures) with a corresponding pocket 22 of the feeding wheel 20. In the feeding unit 16 illustrated in Figures 13 and 14, it is evident that each pocket 19 of the feeding wheel 17 is aligned (in particular, vertically aligned in the embodiment illustrated in the attached figures) with a corresponding pocket 22 of the feeding wheel 20 in two different exchange positions A and B separated and (relatively) apart one from the other; consequently, in the feeding unit 16 illustrated in Figures 13 and 15, the transfer station S3 can be indifferently located in the exchange position A (as illustrated in the alternative of Figure 14), or in the exchange position B (as illustrated in the alternative of Figure 13).

In the feeding unit 16, the location of the transfer station S3 (and hence of the corresponding transfer device 23) along the first feeding path P1 and along the second feeding path P2 can be varied by changing the length of the first feeding path P1 and of the second feeding path P2, and in order to change the orientation imparted to inner wrapping 3 (containing a group 4 of cigarettes) as it moves through the feeding unit 16. When the transfer station S3 is located in the exchange position A (as illustrated in the alternative of Figure 14), the group 4 of cigarettes contained in the inner wrapping 3 has, in the input station S1, the filters oriented towards the inside of the wrapping wheel 17 and has, in the output station S2, the filters oriented in front relative to the feed direction along the feeding path P2; when the transfer station S3 is located in the exchange position B (as illustrated in the alternative of Figure 13), the group 4 of cigarettes contained in the inner wrapping 3 has, in the input station S1, the filters oriented towards the outside of the wrapping wheel 17 and has, in the output station S2, the filters oriented in front relative to the feed direction along the feeding path P2. It is thus apparent that by changing the placement of the transfer station S3 between the exchange positions A and B, the length of the feeding paths P1 and P2 varies, in order to change the orientation imparted to the inner wrapping 3 (containing a group 4 of cigarettes) as it moves through the feeding unit 16: in fact, by changing the position of the transfer station S3 between the exchange positions A and B, the inner wrapping 3 (containing a group 4 of cigarettes) undergoes a rotation of 180° at the output station S2 (that is, in the output station S2 there are two different directions rotated one relative to the other of 180°).

Obviously, the displacement of the transfer station S3 between the exchange positions A and B occurs when the packaging machine 12 is stopped, usually following a change of format operation during which the packaging machine 12 is changed so as to produce a different type of pack 1 of cigarettes (as will be better explained hereinafter).

According to a possible embodiment, the same transfer device 23 can be moved between the exchange position A and the exchange position B to subsequently move the transfer station S3 between positions A and B; in other words, the feeding unit 16 comprises a single transfer device 23 which is alternately placed in the exchange position A or in the exchange position B. According to an alternative embodiment, the feeding unit 16 comprises two transfer devices 23 which can be used alternatively and are arranged respectively in the exchange position A and in the exchange position B; in this embodiment, the change in the placement of the transfer station S3 may also occur with the packaging machine 12 in motion (namely, operating), since it does not require any physical modification to the feeding unit 16 (it is sufficient to disable the transfer device 23 previously active and activate the other transfer device 23).

In the embodiment illustrated in the accompanying figures, the feeding wheel 17 partially overlaps the other feeding wheel 20 so that in each exchange position A and B the pocket 19 of the feeding wheel 17 overlaps and is aligned with the pocket 22 of the feeding wheel 20. In the embodiment illustrated in the accompanying figures, the feeding wheel 17 is partially arranged above the feeding wheel 20 (therefore, the transfer of the inner wrappings 3 in the exchange positions A and B takes place from top to bottom), but according to a different and perfectly equivalent embodiment, the feeding wheel 17 can be partially arranged under the feeding wheel 20 (therefore, the transfer of the inner wrappings 3 in the exchange positions A and B takes place from bottom to top).

In the embodiment illustrated in Figures 13 and 14, in the feeding wheel 17 each pocket 19 is oriented in a radial manner relative to the corresponding rotation axis 18 and in the other feeding wheel 20 each pocket 22 is oriented in a tangential manner relative to the corresponding rotation axis 21; according to a different and perfectly equivalent embodiment, the pocket 19 is oriented in a tangential manner relative to the corresponding rotation axis 18 and in the other feeding wheel 20 each pocket 22 is oriented in a radial manner relative to the corresponding rotation axis 21. In particular, each pocket 19 and 22 has a rectangular section having a longer side and a shorter side (thus reproducing the shape of the inner wrappings 3): in the feeding wheel 17 each pocket 19 is oriented in a radial manner relative to the corresponding rotation axis 18 and therefore, the longer side of each pocket 19 is oriented in a radial manner relative to the corresponding rotation axis 18, whereas in the feeding wheel 20 each pocket 22 is oriented in a tangential manner relative to the corresponding rotation axis 21 and therefore the longer side of each pocket 22 is oriented in a tangential manner relative to the corresponding rotation axis 21.

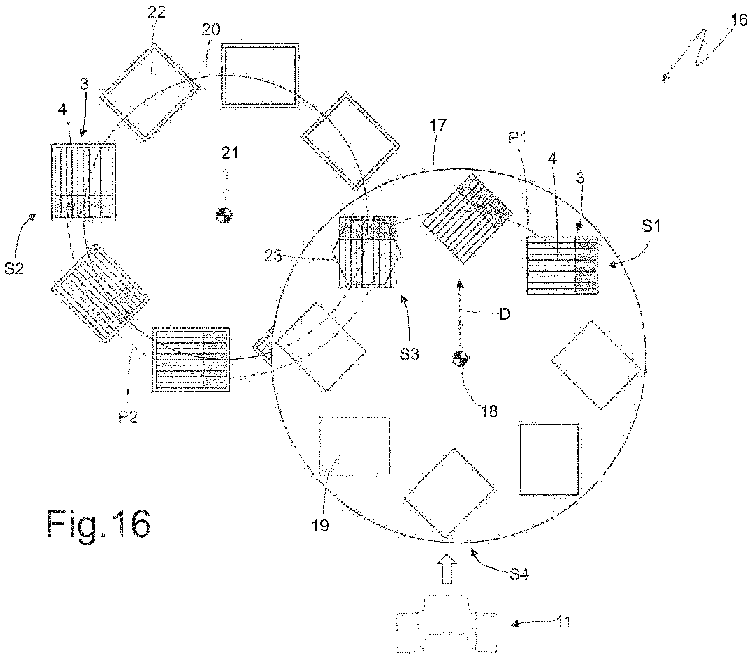

As mentioned above, in the embodiment illustrated in Figures 13 and 14, a pocket 19 of the feeding wheel 17 overlaps and is aligned with a pocket 22 of the feeding wheel 20 in two separate and distinct exchange positions A and B; therefore, the transfer station S3 can be indifferently located in both the exchange positions A and B without making any change to the feeding wheels 17 and 20. In the different embodiment illustrated in Figures 15 and 16, a pocket 19 of the feeding wheel 17 overlaps and is aligned with a pocket 22 of the feeding wheel 20 in a single exchange position and then, to change the location of the transfer station S3 along the feeding path P1, it is necessary to move the feeding wheel 17 relative to the feeding wheel 20. In other words, the feeding wheel 17 is mounted movable to change its position relative to the other feeding wheel 20 (which, instead, is always in the same position) in order to change the position of the transfer station S3 along its own feeding path P1 (while the feeding path P2 remains unchanged); according to a different and perfectly equivalent embodiment, the feeding wheel 20 is mounted movable so as to change its relative position with respect to the other feeding wheel 17 (which is always in the same position) in order to change the position of the transfer station S3 along its own feeding path P2 (while the feeding path P1 remains unchanged).

It should be noted that from the operating configuration illustrated in Figure 15 to the operating configuration illustrated in Figure 16, the feeding wheel 20 is always in the same position (namely, its rotation axis 21 has not been displaced), whereas from the operating configuration illustrated in Figure 15 to the operating configuration illustrated in Figure 16, the feeding wheel 17 has been displaced relative to the feeding wheel 20 (and therefore relative to the frame 24 of the packaging machine 12); consequently, from the operating configuration illustrated in Figure 15 to the operating configuration illustrated in Figure 16, the feeding path P2 has remained the same whereas the path P1 has been considerably shortened. It is also important to note that from the operating configuration illustrated in Figure 15 to the operating configuration illustrated in Figure 16, the position of the input station S1 and the position of the transfer station S3 relative to the frame 24 of the packaging machine 12 remains unchanged (that is, the input station S1 and the transfer station S3 are arranged in fixed position in the frame 24 of the packaging machine 12); in other words, the movement of the feeding wheel 17 relative to the frame 24 of the packaging machine 12 causes a relative displacement of the feeding wheel 17 with respect to the feeding wheel 20, with respect to the input station S1, and with respect to the transfer station S3. In summary, the movement of the movable feeding wheel 17 does not change the position of the input station S1, the position of the output station S2, and the position of the transfer station S3 with respect to the frame 24 of the packaging machine 12.

According to the embodiment illustrated in the accompanying figures, the movable feeding wheel 17 is designed to translate perpendicular to its own rotation axis 18 along a straight and horizontal displacement direction D. According to a possible (but not binding) embodiment, a slide is provided, which is mounted so as to slide along a fixed guide and supports at least one bearing wherein a shaft of the movable feeding wheel 17 is mounted in a rotary manner.

In the embodiment illustrated in Figures 13-16, the two feeding wheels 17 and 20 have the same number of pockets 19 and 22 and in particular eight pockets 19 and 22; according to other, and perfectly equivalent, embodiments not illustrated, the two feeding wheels 17 and 20 have the same number of pockets 19 and 22 and said number is different from eight (e.g. ten or twelve pockets 19 and 22) or the two feeding wheels 17 and 20 have a different number of pockets 19 and 22 (e.g. nine and twelve pockets 19 and 22, twelve and six pockets 19 and 22, eight and sixteen pockets 19 and 22).

As illustrated in Figure 12, the forming unit 13 comprises a hopper 25 provided with a plurality of mouths from which the groups 4 of cigarettes are cyclically extracted; in front of the hopper 25 a belt forming conveyor 26 is provided, which supports a plurality of forming pockets 27, each of which receives a corresponding group 4 of cigarettes from a mouth of the hopper 25.

The wrapping unit 14 comprises a transfer wheel 28 which rotates by steps around a horizontal rotation axis and is provided with a plurality of transfer pockets 29, each of which receives a corresponding group 4 of cigarettes from a forming pocket 27 of the forming conveyor 26. According to a possible (but not binding) embodiment, in the transfer pockets 29 of the transfer wheel 28 the reinforcing elements 8 (obviously when provided) are coupled to the corresponding groups 4 of cigarettes.

The wrapping unit 14 comprises a wrapping wheel 30, which rotates by steps around a vertical rotation axis and is provided with a plurality of wrapping pockets 31, each of which receives a corresponding group 4 of cigarettes from a transfer pocket 29 of the transfer wheel 28 together with a wrap 7 which is "U"-folded around the group 4 of cigarettes as it enters the wrapping pocket 31. The wrapping wheel 30 feeds the groups 4 of cigarettes along an initial and semi-circular segment of a wrapping path P3 wherein each wrap 7 is folded and stabilized around a corresponding group 4 of cigarettes so as to form a sealed inner wrapping 3. Between the transfer wheel 28 and the wrapping wheel 30 a feed conveyor 32 is interposed, which vertically feeds the flat wraps 7 so as to interpose each wrap 7 between a transfer pocket 29 of the transfer wheel 28 and a corresponding wrapping pocket 31 of the wrapping wheel 30. While a group 4 of cigarettes is contained in a wrapping pocket 31 of the wrapping wheel 30, the corresponding wrap 7 is folded so as to assume a tubular shape (having two opposite open ends) and subsequently the tubular shape of the wrap 7 is stabilized by performing a cross heat-sealing.

The wrapping unit 14 comprises a straight wrapping conveyor 33 which receives the groups 4 of cigarettes partially wrapped in the corresponding wraps 7 from the wrapping pockets 31 of the wrapping wheel 30 and feeds the groups 4 of cigarettes along a final and straight segment of the wrapping path P3 along which the folding of each wrap 7 is completed so as to complete the creating of the corresponding inner wrapping 3; in particular, along the final and straight segment of the wrapping path P3, the two open ends of each tubular wrap are closed and therefore the corresponding inner wrapping 3 is stabilized by performing a pair of longitudinal heat-sealing opposite one to the other.

Finally, the wrapping unit 14 comprises a transfer wheel 34 which rotates by steps around a horizontal rotation axis and is provided with a plurality of transfer pockets 35, each of which receives a corresponding inner wrapping 3 from the straight wrapping conveyor 33 in a transfer station S5, and feeds the inner wrapping 3 to a corresponding pocket 19 of the feeding wheel 17 of the feeding unit 16 in the input station S1.

The wrapping unit 15 comprises a wrapping wheel 36, which rotates by steps around a horizontal rotation axis and is provided with a plurality of wrapping pockets 37, each of which receives a corresponding inner wrapping 3 from a pocket 22 of the feeding wheel 20 in the output station S2 together with a blank 10 which is "U"-folded around the inner wrapping 3 as it enters the wrapping pocket 37. Between the feeding wheel 20 of the feeding unit 16 and the wrapping wheel 36, of the wrapping unit 15 a feeding conveyor 38 is arranged, which horizontally feeds the blanks 10 so as to interpose each blank 10 between a pocket 22 of the feeding wheel 20 and a corresponding wrapping pocket 37 of the wrapping wheel 36.

In Figure 12 the packaging machine 12 is illustrated, in a first operating configuration designed to produce the pack 1 of cigarettes illustrated in Figures 1 and 2 and containing the sealed inner wrapping 3 illustrated in Figures 4 and 5. In the first operating configuration illustrated in Figure 12, the feeding unit 16 is arranged as illustrated in Figure 14 or as illustrated in Figure 15 so as to receive, in the input station S1, the inner wrappings 3 (containing the respective groups 4 of cigarettes) with the filters arranged in front.

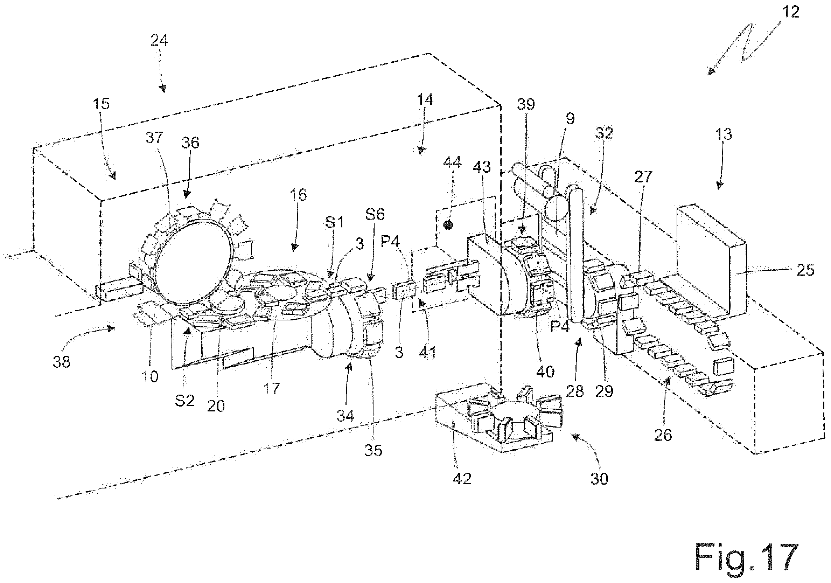

In Figure 17 the packaging machine 12 is illustrated, in a second operating configuration designed to produce the pack 1 of cigarettes illustrated in Figures 1 and 2 and containing the unsealed inner wrapping 3 illustrated in Figure 8. In the second operating configuration illustrated in Figure 17, the feeding unit 16 is arranged as illustrated in Figure 13 or as in Figure 16 so as to receive, in the input station S1, the inner wrappings 3 (containing the respective groups 4 of cigarettes) with the filters arranged in the back.

In the second operating configuration illustrated in Figure 17, the forming unit 13 is unchanged with respect to the first operating configuration illustrated in Figure 17; in other words, when changing from the first operating configuration illustrated in Figure 12 to the second operating configuration illustrated in Figure 17 (and vice versa), the forming unit 13 is not subjected to any change.

In the second operating configuration illustrated in Figure 17, the wrapping unit 14 is changed as the vertical rotation axis wrapping wheel 30 is no longer used and is replaced by a wrapping wheel 39 rotating by steps around a horizontal rotation axis and is provided with a plurality of wrapping pockets 40, each of which receives a corresponding group 4 of cigarettes from a transfer pocket 29 of the transfer wheel 28 together with a wrap 9 which is "U"-folded around the group 4 of cigarettes as it enters the wrapping pocket 40. The wrapping wheel 39 feeds the groups 4 of cigarettes along an initial and semi-circular segment of a wrapping path P4 wherein, each wrap 7 is folded around a corresponding group 4 of cigarettes so as to form an unsealed inner wrapping 3. Between the transfer wheel 28 and the wrapping wheel 39 the feed conveyor 32 is always interposed, which vertically feeds the wraps 9 so as to interpose each wrap 9 between a transfer pocket 29 of the transfer wheel 28 and a corresponding wrapping pocket 40 of the wrapping wheel 39. While a group 4 of cigarettes is contained in a wrapping pocket 40 of the wrapping wheel 39, the corresponding wrap 9 is folded to assume a tubular shape (having two opposite open ends).

In the second operating configuration illustrated in Figure 17, the wrapping unit 14 is changed as the straight wrapping conveyor 33 (which, for clarity, is not illustrated in Figure 17) is no longer used and is replaced by another straight wrapping conveyor 41, which receives the groups 4 of cigarettes partially wrapped in the corresponding wraps 9 from the wrapping pockets 40 of the wrapping wheel 39 and feeds the groups 4 of cigarettes along a final and straight segment of the wrapping path P4 along which the folding of each wrap 9 is completed so as to complete the creating of the corresponding inner wrapping 3; in particular, along the straight segment of the wrapping path P4, the two open ends of each tubular wrap are closed. At the end of the straight wrapping conveyor 41, the inner wrappings 3 are transferred to corresponding transfer pockets 35 of the transfer wheel 34 in a transfer station S6 (different and separated from the transfer station S5, at the end of the straight wrapping conveyor 33).

In other words, in moving from the first operating configuration illustrated in Figure 12 to the second operating configuration illustrated in Figure 17 (and vice versa), the vertical rotation axis wrapping wheel 30 is replaced by the horizontal axis wrapping wheel 39 and the straight wrapping conveyor 33 is replaced by the straight wrapping conveyor 41.

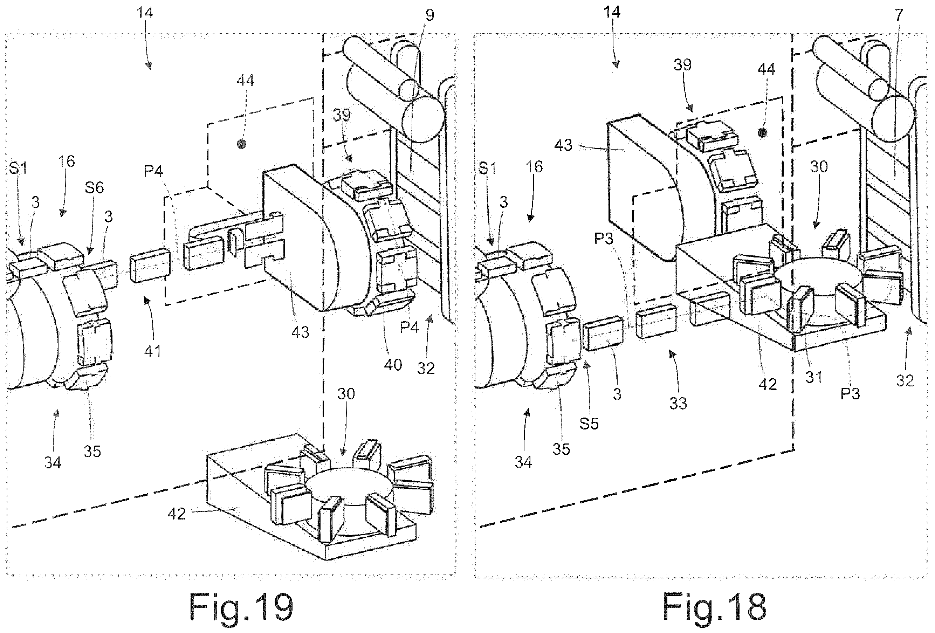

As better illustrated in Figures 18 and 19, the two straight wrapping conveyors 33 and 41 are arranged in different positions, namely they are parallel to and spaced apart one with the other, and therefore are side by side one from the other; consequently, the two straight wrapping conveyors 33 and 41 can "*coexist*", namely, remain both in the corresponding operating positions without interfering one with respect to the other. Consequently, according to a preferred embodiment, the two straight wrapping conveyors 33 and 41 are mounted in a fixed position on the frame 24 of the packaging machine 12 and remain both mounted in the corresponding operating positions in the first operating configuration and in the second operating configuration (obviously in the first operating configuration only the straight wrapping conveyor 33 receives the groups 4 of cigarettes from the wrapping wheel 30, whereas in the second operating configuration only the straight wrapping conveyor 41 receives the groups 4 of cigarettes from the wrapping wheel 39) .

As better illustrated in Figures 18 and 19, the two wrapping wheels 30 and 39 are substantially in the same position and hence it is evident that the two wrapping wheels 30 and 39 cannot "*coexist*", namely, remain both in the corresponding operating positions without interfering one with respect to the other; consequently, the wrapping wheels 30 and 39 are mounted in a movable manner so as to translate relative to the frame 24 of the packaging machine 12 between an operating position, taken when using its own straight wrapping conveyor 33 or 41, and a rest position, taken when the other straight wrapping conveyor 41 or 33 is used. Each wrapping wheel 30 and 39 translates along a linear movement direction between the operating position and the rest position. In particular, in Figure 18 (first operating configuration) the wrapping wheel 30 is arranged in the operating position while the wrapping wheel 39 is in the rest position, whereas in Figure 19 (second operating configuration) the wrapping wheel 30 is arranged in the rest position while the wrapping wheel 39 is arranged in the operating position.

According to the embodiment illustrated in the accompanying figures, the wrapping wheel 30 is mounted on a support 42, which is mounted movable on the frame 24 of the packaging machine 12 so as to translate vertically relative to the frame 24 itself (therefore parallel to the rotation axis of the wrapping wheel 30); similarly, the wrapping wheel 39 is mounted on a support 43 which is mounted movable on the frame 24 of the packaging machine 12 to translate horizontally relative to the frame 24 (therefore perpendicular to the rotation axis of the wrapping wheel 39). According to the embodiment illustrated in the accompanying figures, the frame 24 of the packaging machine 12 has a parking compartment 44, inside of which the wrapping wheel 39 is arranged in the rest position (as illustrated in Figures 12 and 18).

The wrapping wheel 30 and the straight wrapping conveyor 33, together, form a first wrapping conveyor, which receives a group 4 of tobacco articles from the forming unit 13 and feeds the group 4 of tobacco articles along the wrapping path P3 so as to create a first type of folding of the wrap 7 in order to form a sealed inner wrapping 3. Similarly, the wrapping wheel 39 and the straight wrapping conveyor 41, together, form a second wrapping conveyor, which receives a group 4 of tobacco articles from the forming unit 13 and feeds the group 4 of tobacco articles along the wrapping path P4 so as to create a second type of folding of the wrap 9 in order to form an unsealed inner wrapping 3. The second wrapping conveyor (formed by the wrapping wheel 39 and by the straight wrapping conveyor 41) is arranged close to the first wrapping conveyor (formed by the wrapping wheel 30 and by the straight wrapping conveyor 33) and can be used as an alternative to the first wrapping conveyor.

It is important to note that in the first operating configuration illustrated in Figures 12 and 18, the vertical rotation axis wrapping wheel 30 imparts a change in orientation to the groups 4 of cigarettes, namely, upstream of the wrapping wheel 30 (thus exiting from the hopper 25) the groups 4 of cigarettes have the filters in the back whereas downstream of the packing wheel 30 the groups 4 of cigarettes have the filters in front (as illustrated in Figures 14 and 15); instead, the horizontal rotation axis wrapping wheel 39 does not imparts any change in orientation to the groups 4 of cigarettes, namely upstream of the wrapping wheel 39 (thus exiting from the hopper 25), and downstream of the wrapping wheel 39, the groups 4 of cigarettes have always the filters in the back (as illustrated in Figures 13 and 16). Consequently, in the input station S1, the groups 4 of cigarettes (contained in the inner wrappings 3) change their orientation by changing the operating configuration of the packaging machine 12; with the methods described above, when changing the operating configuration of the packaging machine 12 the feeding unit 16 is also changed, by changing the position of the transfer station S3 so that in the output station S2 the groups 4 of cigarettes (contained in the inner wrappers 3) have always the same orientation.

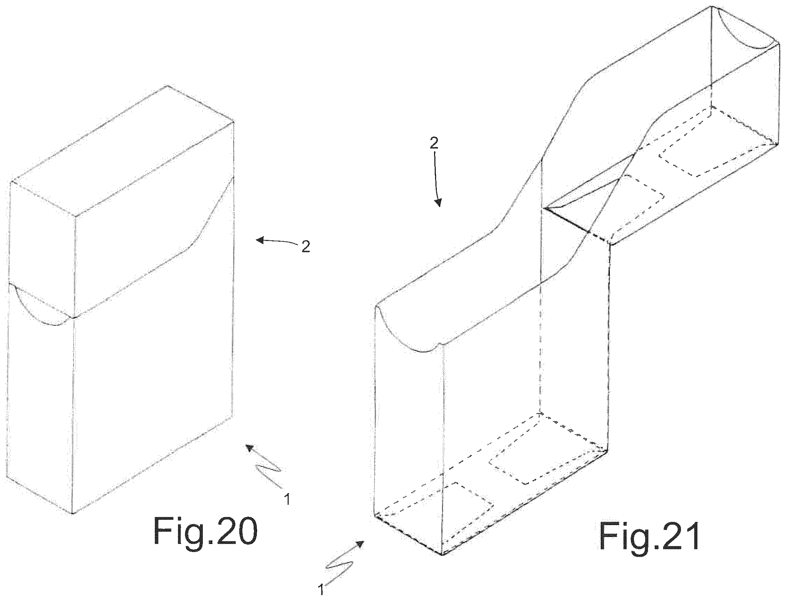

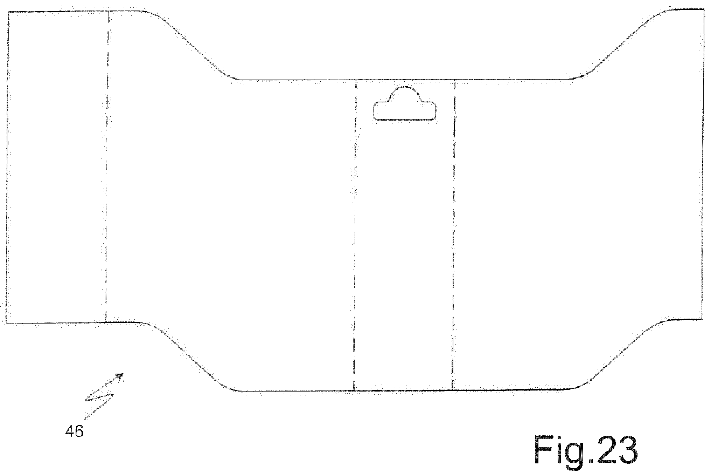

Between the first operating configuration illustrated in Figures 12 and 18 and the second operating configuration illustrated in Figures 17 and 19, the type of inner wrapping 3 produced is changed (sealed inner wrapping 3 in the first operating configuration and unsealed inner wrapping 3 in the second operating configuration) while the outer container 2 remains substantially unchanged (obviously the graphics and/or dimensions of the outer container 2 can change, but its shape remains the same). The packaging machine 12 is further designed to assume a third operating configuration wherein the type of outer container 2 is changed: instead of creating the conventional outer container 2 illustrated in Figures 1 and 2, the outer container 2 referred to as "*zippo*", illustrated in Figures 20 and 21, is created. In order to create the conventional outer container 2 illustrated in Figures 1 and 2, a longitudinally developed blank 10 (illustrated, for example, in Figure 10) and a traditional small-size collar 11 (illustrated, for example, in Figure 11) are used; whereas, to create the "*zippo*" outer container 2 illustrated in Figures 20 and 21 a transversally developed blank 45 (illustrated, for example, in Figure 23) and an unfolded large-size collar 46 (illustrated, for example, in Figure 23) are used.

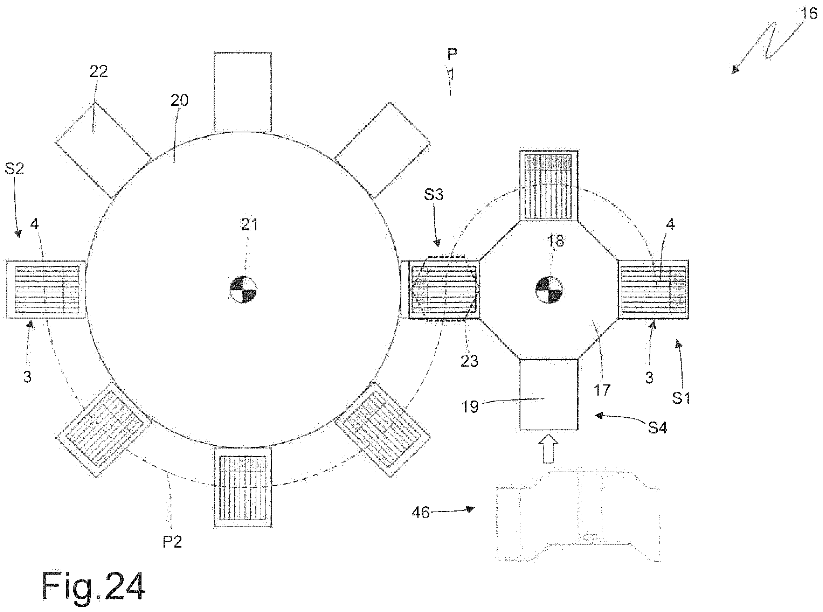

In the third operating configuration of the packaging machine 12, the feeding unit 16 illustrated in Figures 13 and 14 is changed as illustrated in Figure 24 by replacing the feeding wheel 20, having the pockets 22 oriented in a tangential manner relative to the corresponding rotation axis 21, with an similar feeding wheel 20 having the pockets 22 oriented in a radial manner relative to the corresponding axis 21; said change of orientation of the pockets 22 of the feeding wheel 20 is necessary in order not to rotate the entire wrapping wheel 36 of the wrapping unit 15 which can remain in the same identical position (obviously it is necessary to replace the wrapping pockets 37 of the wrapping wheel 36 and the folding devices associated with the wrapping wheel 36, but the position of wrapping wheel 36 remains unchanged). In other words, the blank 10 has a longitudinal development whereas the blank 45 has a transversal development (namely, the blanks 10 and 45 have developments perpendicular one to the other), therefore in order to fold the blanks 10 and 45 in the same type of wrapping wheel 36 (i.e. without changing the position and orientation of the wrapping wheel 36) it is necessary to rotate the inner wrapping 3 (containing a group 4 of cigarettes) by 90° as it enters into the wrapping wheel 36 (namely, in the output station S2 of the feeding unit 16); said 90° rotation of inner wrapping 3 (containing a group 4 of cigarettes) in the output station S2 of the feeding unit 16 is obtained by replacing the pockets 22 oriented in a tangential manner relative to the corresponding rotation axis 21 with pockets 22 oriented in a radial manner relative to the corresponding rotation axis 21.

In order not to modify the position of the input station S1 (which would also have an impact on the wrapping unit 14), the central drum of the feeding wheel 17 is replaced with another central drum with different diameter (particularly of smaller diameter) and always having the pockets 19 oriented in a radial manner; this replacement of the central drum of the feeding wheel 17 entails a translation of the rotation axis 18 of the feeding wheel 17 (hence, as described above a slide is provided, which supports at least one bearing wherein a shaft of the feeding wheel 17 is mounted in a rotary manner).

Also in the third operating configuration, the feeding unit 16 comprises feeding station S4, wherein a collar 46 is fed to each pocket 19 of the feeding wheel 17 upstream of the input station S1 (namely, when pocket 19 is still "*empty*", i.e. without the inner wrapping 3) so that in the input station S1 the inner wrapping 3 (containing a group 4 of cigarettes) by entering into the pocket 19 of the feeding wheel 17 couples with the previously fed collar 46.

The feeding unit 16 in the first operating configuration (illustrated in Figure 13) and in the second operating configuration (illustrated in Figure 14) comprises the feeding wheel 17, wherein each pocket 19 is oriented in a radial manner relative to the corresponding rotation axis 18 and the feeding wheel 20, wherein each pocket 22, is oriented in a tangential manner relative to the corresponding rotation axis 21 so as to change the orientation of the inner wrappings 3 (containing respective groups of 4 cigarettes) as it moves through the feeding unit 16; namely, the inner wrappings 3 (containing respective groups 4 of cigarettes) enter with a radial orientation in the input station S1 and exit with a tangential orientation in the output station S2. As mentioned above, the first operating configuration (illustrated in Figure 13) and the second operating configuration (illustrated in Figure 14) are used with the longitudinally developed blank 10.

Instead, the feeding unit 16 in the third operating configuration (illustrated in Figure 24) comprises the feeding wheel 17, wherein each pocket 19 is oriented in a radial manner relative to the corresponding rotation axis 18, and the feeding wheel 20, wherein each pocket 22 is oriented in a radial manner relative to the corresponding rotation axis 21 so as not to change the orientation of the inner wrappings 3 (containing respective groups 4 cigarettes) as they move through the feeding unit 16; the inner wrappings 3 (containing respective groups 4 of cigarettes) enter with a radial orientation in the input station S1 and exit with a radial orientation in the output station S2. As mentioned above, the third operating configuration (illustrated in Figure 24) is used with the transversally developed blank 45. According to a different (and perfectly equivalent) embodiment not illustrated, the feeding unit 16 in the third operating configuration comprises the feeding wheel 17, wherein each pocket 19 is oriented in a tangential manner relative to the corresponding rotation axis 18 and the feeding wheel 20, in each pocket 22, is oriented in a tangential manner relative to the corresponding rotation axis 21 so as not to change the orientation of the inner wrappings 3 (containing respective groups 4 of cigarettes) as it moves through the feeding unit 16; the inner wrappings 3 (containing respective groups 4 of cigarettes) enter with a tangential orientation in the input station S1 and exit with a tangential orientation in the output station S2.

In the embodiments illustrated in the attached figures, the longitudinal and transverse edges of the outer container 2 are straight; alternatively, the longitudinal and/or transverse edges of the outer container 2 may be rounded or bevelled. In the embodiments illustrated in the attached figures, the pack 1 of cigarettes contains a group 4 of cigarettes; alternatively, the pack 1 of cigarettes can contain any other kind of tobacco article such as cigar, electrical or electronic cigarettes (namely, cigarettes which generate an aerosol without combustion), cartridges and refills for electronic cigarettes, next-generation cigarettes.

The packaging machine 12 described above has numerous advantages.

First, the packaging machine 12 described above allows to change in a particularly rapid manner its operating configuration to create a sealed inner wrapping 3 (first operating configuration illustrated in Figure 12) or to create an unsealed inner wrapping 3 (second operating configuration illustrated in Figure 17). In said respect, it is important to note that the above-described packaging machine 12 can be designed from the beginning to produce both a sealed inner wrapping 3 and an unsealed inner wrapping 3 (namely, it can comprise, from the beginning, both the wrapping wheel 30 and the straight wrapping conveyor 33 and the wrapping wheel 39 and the straight wrapping conveyor 41), the above-described packaging machine 12 can be designed to produce only a sealed inner wrapping 3 (namely, it can comprise, from the beginning, the wrapping wheel 30 and the straight wrapping conveyor 33 but not the wrapping wheel 39 and the straight wrapping conveyor 41) and being integrated, subsequently, to produce an unsealed inner wrapping 3, or the packaging machine 12 described above can be designed to produce only an unsealed inner wrapping 3 (namely, it can comprise, from the beginning, the wrapping wheel 39 and the straight wrapping conveyor 41 but not the wrapping wheel 30 and the straight wrapping conveyor 33) and being integrated, subsequently, to produce a sealed inner wrapping 3.

The packaging machine 12 described above allows to change in a particularly rapid manner its operating configuration also to create a conventional outer container (of the type illustrated in Figures 1 and 2 - first and second operating configuration illustrated in Figures 12 and 17) or a "*zippo*" outer container (of the type illustrated in Figures 20 and 21 - third operating configuration illustrated in Figure 24).

Furthermore, the packaging machine 12 described above is relatively inexpensive, since a limited number of components are changed between the various operating configurations.

Finally, the packaging machine 12 described above is particularly compact considering that it allows to create, with few modifications, packs 1 of cigarettes substantially different one from the other.

## Claims

1. A packaging machine (12) for the production of a pack (1) of tobacco articles comprising an inner wrapping (3) containing a group (4) of tobacco articles and an outer container (2), which houses the inner wrapping (3); the packaging machine (12) comprises:
a first wrapping unit (14) for creating the inner wrapping (3) around the group (4) of tobacco articles by folding a wrap (7; 9) ;
a second wrapping unit (15) for creating the outer container (2) around the inner wrapping (3) by folding a blank (10; 45); and a feeding unit (16) for receiving the inner wrapping (3) from the first wrapping unit (14) in an input station (S1) and releasing the inner wrapping (3) to the second wrapping unit (15) in an output station (S2);
wherein the feeding unit (16) comprises: a first feeding wheel (17), rotatable around a first rotation axis (18) and which supports at least one first pocket (19), configured to advance along a first feeding path (P1) and is designed to receive the inner wrapping (3) in the input station (S1); a second feeding wheel (20), rotatable around a second rotation axis (21) and which supports at least one second pocket (22), configured to advance along a second feeding path (P2) and is designed to release the inner wrapping (3) in the output station (S2); and a transfer device (23), which is arranged in a transfer station (S3) for transferring the inner wrapping (3) from the first pocket (19) to the second pocket (22);
the packaging machine (12) is **characterized in that**, when the packaging machine (12) is brought to a standstill, the position of the transfer station (S3) along the first feeding path (P1) and/or along the second feeding path (P2) can be changed by means of arranging said transfer device (23) on a different exchange position, thus changing the length of the first feeding path (P1) and/or of the second feeding path (P2), and in order to change the orientation given to the inner wrapping (3) as it moves through the feeding unit (16).

2. The packaging machine (12) according to claim 1, wherein in a feeding wheel (17; 20), the pocket (19; 22) is oriented in a radial manner relative to the corresponding rotation axis (18; 21) and, in the other feeding wheel (20; 17), the pocket (22; 19) is oriented in a tangential manner relative to the corresponding rotation axis (21; 18).

3. The packaging machine (12) according to claim 2, wherein:
each pocket (19; 22) has a rectangular section having a longer side and a shorter side; and
in a feeding wheel (17; 20), the longer side of the pocket (19; 22) is oriented in a radial manner relative to the corresponding rotation axis (18; 21) and, in the other feeding wheel (20; 17), the longer side of the pocket (22; 19) is oriented in a tangential manner relative to the corresponding rotation axis (21; 18).

4. The packaging machine (12) according to claim 2 or 3, wherein in the first feeding wheel (17), the first pocket (19) is oriented in a radial manner relative to the first rotation axis (18) and, in the second feeding wheel (20) the second pocket (22) is oriented in a tangential manner relative to the second rotation axis (21).

5. The packaging machine (12) according to one of the claims from 1 to 4, wherein the transfer station (S3) can indifferently be placed in a first exchange position (A), in which the first pocket (19) of the first feeding wheel (17) and the second pocket (22) of the second feeding wheel (20) are aligned with one another, or in a second exchange position (B), which is different and separate from the first exchange position (A), and in which the first pocket (19) of the first feeding wheel (17) and the second pocket (22) of the second feeding wheel (20) are aligned with one another.

6. The packaging machine (12) according to claim 5, wherein a feeding wheel (17) partially overlaps the other feeding wheel (20), so that, in each exchange position (A, B), the two pockets (19, 22) overlap and are aligned with one another.

7. The packaging machine (12) according to claim 6, wherein:
the first feeding wheel (17) comprises a plurality of first pockets (19);
the second feeding wheel (20) comprises a plurality of second pockets (22); and
in each exchange position (A, B), a first pocket (19) of the first feeding wheel (17) overlaps and is aligned with a second pocket (22) of the second feeding wheel (20).

8. The packaging machine (12) according to claim 5, 6 or 7, wherein the transfer device (23) can be moved between the first exchange position (A) and the second exchange position (B).

9. The packaging machine according to claim 5, 6 or 7 and comprising two transfer devices (23), which can be used alternatively and are arranged in the first exchange position (A) and in the second exchange position (B), respectively.

10. The packaging machine according to one of the claims from 1 to 4, wherein a feeding wheel (17; 20) is mounted movable so as to change its relative position with respect to the other feeding wheel (20; 17), in order to change the position of the transfer station (S3) along its own feeding path (P1; P2).

11. The packaging machine (12) according to claim 10, wherein the movable feeding wheel (17; 20) is designed to translate perpendicularly to its own rotation axis (18; 21).

12. The packaging machine (12) according to claim 11 and comprising a slide, which is mounted so as to slide along a fixed guide and supports at least one bearing, on which a shaft of the movable feeding wheel (17; 20) is mounted in a rotary manner.

13. The packaging machine (12) according to claim 10, 11 or 12, wherein the movement of the movable feeding wheel (17; 20) does not change the position of the input station (S1), the position of the output station (S2) and the position of the transfer station (S3) relative to a frame (24) of the packaging machine (12) .

14. The packaging machine (12) according to claim 10, 11 or 12, wherein the movement of the movable feeding wheel (17; 20) changes the position of the transfer station (S3) relative to a frame (24) of the packaging machine (12).

15. The packaging machine (12) according to claim 14, wherein a central drum of the movable feeding wheel (17; 20) can be replaced with another central drum with a different diameter, so as not to change the position of the input station (S1) or the position of the output station (S2) relative to a frame (24) of the packaging machine (12).

16. A wrapping method for the production of a pack (1) of tobacco articles comprising an inner wrapping (3) containing a group (4) of tobacco articles and an outer container (2), which houses the inner wrapping (3); the wrapping method comprises the steps of:
creating the inner wrapping (3) around the group (4) of tobacco articles in a first wrapping unit (14) by folding a wrap (7; 9) ;
creating the outer container (2) around the inner wrapping (3) in a second wrapping unit (15) by folding a blank (10; 45); and feeding the inner wrapping (3) from the first wrapping unit (14) to the second wrapping unit (15) by means of a feeding unit (16), which receives the inner wrapping (3) from the first wrapping unit (14) in an input station (S1) and releases the inner wrapping (3) to the second wrapping unit (15) in an output station (S2);
wherein the feeding unit (16) comprises: a first feeding wheel (17), which rotates around a first rotation axis (18) and supports at least one first pocket (19), which advances along a first feeding path (P1) and is designed to receive the inner wrapping (3) in the input station (S1); a second feeding wheel (20), which rotates around a second rotation axis (21) and supports at least one second pocket (22), which advances along a second feeding path (P2) and is designed to release the inner wrapping (3) in the output station (S2); and a transfer device (23), which is arranged in a transfer station (S3) to transfer the inner wrapping (3) from the first pocket (19) to the second pocket (22);
the wrapping method is **characterized in that** it comprises, when the packaging machine (12) is brought to a standstill, the further step of changing the position of the transfer station (S3) along the first feeding path (P1) and/or along the second feeding path (P2), thus changing the length of the first feeding path (P1) or of the second feeding path (P2) and in order to change the orientation given to the inner wrapping (3) as it moves through the feeding unit (16).

## Patentansprüche

1. Verpackungsmaschine (12) für die Herstellung einer Packung (1) von Tabakwaren, die eine Innenumhüllung (3), die eine Gruppe (4) von Tabakwaren aufweist, und einen Außenbehälter (2), der die Innenumhüllung (3) aufnimmt, umfasst; wobei die Verpackungsmaschine (12) Folgendes umfasst:
eine erste Einwickeleinheit (14), um die Innenumhüllung (3) um die Gruppe (4) von Tabakwaren durch Falten einer Umwicklung (7; 9) herzustellen;
eine zweite Einwickeleinheit (15), um den Außenbehälter (2) um die Innenumhüllung (3) durch Falten eines Zuschnitts (10; 45) herzustellen; und
eine Zufuhreinheit (16), um in einer Eingabestation (S1) die Innenumhüllung (3) von der ersten Einwickeleinheit (14) aufzunehmen und die Innenumhüllung (3) in einer Ausgabestation (S2) zur zweiten Einwickeleinheit (15) freizugeben; wobei
die Zufuhreinheit (16) Folgendes umfasst: ein erstes Zufuhrrad (17), das um eine erste Drehachse (18) drehbar ist und das mindestens eine erste Tasche (19) trägt, die konfiguriert ist, auf einem ersten Zufuhrpfad (P1) vorzurücken, und ausgelegt ist, in der Eingabestation (S1) die Innenumhüllung (3) aufzunehmen; ein zweites Zufuhrrad (20), das um eine zweite Drehachse (21) drehbar ist und das mindestens eine zweite Tasche (22) trägt, die konfiguriert ist, auf dem zweiten Zufuhrpfad (P2) vorzurücken und ausgelegt ist, die Innenumhüllung (3) in der Ausgabestation (S2) freizugeben; und eine Übergabeeinrichtung (23), die in einer Übergabestation (S3) angeordnet ist, um die Innenumhüllung (3) von der ersten Tasche (19) zur zweiten Tasche (22) zu übergeben; und
die Verpackungsmaschine (12) **dadurch gekennzeichnet ist, dass** dann, wenn die Verpackungsmaschine (12) zum Stillstand gebracht wird, die Position der Übergabestation (S3) entlang des ersten Zufuhrpfades (P1) und/oder entlang des zweiten Zufuhrpfades (P2) durch Anordnen der Übergabeeinrichtung (23) bei einer verschiedenen Austauschposition geändert werden kann, um somit die Länge des ersten Zufuhrpfades (P1) und/oder des zweiten Zufuhrpfades (P2) zu ändern und um die Orientierung, die der Innenumhüllung (3) gegeben wird, während sie sich durch die Zufuhreinheit (16) bewegt, zu ändern.

2. Verpackungsmaschine (12) nach Anspruch 1, wobei die Tasche (19; 22) an einem Zufuhrrad (17; 20) in einer radialen Weise in Bezug auf die entsprechende Drehachse (18; 21) orientiert ist und die Tasche (22; 19) am anderen Zufuhrrad (20; 17) in einer tangentialen Weise in Bezug zur entsprechenden Drehachse (21; 18) orientiert ist.

3. Verpackungsmaschine (12) nach Anspruch 2, wobei
jede Tasche (19; 22) einen rechteckigen Abschnitt besitzt, der eine längere Seite und eine kürzere Seite besitzt; und
die längere Seite der Tasche (19; 22) an einem Zufuhrrad (17; 20) in einer radialen Weise in Bezug auf die entsprechende Drehachse (18; 21) orientiert ist und die längere Seite der Tasche (22; 19) am anderen Zufuhrrad (20; 17) in einer tangentialen Weise in Bezug auf die entsprechende Drehachse (21; 18) orientiert ist.

4. Verpackungsmaschine (12) nach Anspruch 2 oder 3, wobei die erste Tasche (19) am ersten Zufuhrrad (17) in einer radialen Weise in Bezug auf die erste Drehachse (18) orientiert ist und die zweite Tasche (22) am zweiten Zufuhrrad (20) in einer tangentialen Weise in Bezug zur zweiten Drehachse (21) orientiert ist.

5. Verpackungsmaschine (12) nach einem der Ansprüche 1 bis 4, wobei die Übergabestation (S3) bei einer ersten Austauschposition (A), bei der die erste Tasche (19) des ersten Zufuhrrades (17) und die zweite Tasche (22) des zweiten Zufuhrrades (20) aufeinander ausgerichtet sind, oder bei einer zweiten Austauschposition (B), die von der ersten Austauschposition (A) verschieden und separat ist und bei der die erste Tasche (19) des ersten Zufuhrrades (17) und die zweite Tasche (22) des zweiten Zufuhrrades (20) aufeinander ausgerichtet sind, indifferent angeordnet werden kann.

6. Verpackungsmaschine (12) nach Anspruch 5, wobei ein erstes Zufuhrrad (17) mit dem anderen Zufuhrrad (20) teilweise überlappt, derart, dass die zwei Taschen (19, 22) bei jeder Austauschposition (A, B) überlappen und aufeinander ausgerichtet sind.

7. Verpackungsmaschine (12) nach Anspruch 6, wobei
das erste Zufuhrrad (17) mehrere erste Taschen (19) aufweist;
das zweite Zufuhrrad (20) mehrere zweite Taschen (22) aufweist; und
eine erste Tasche (19) des ersten Zufuhrrades (17) bei jeder Austauschposition (A, B) eine zweite Tasche (22) des zweiten Zufuhrrades (20) überlappt und auf sie ausgerichtet ist.

8. Verpackungsmaschine (12) nach Anspruch 5, 6 oder 7, wobei die Übergabeeinrichtung (23) zwischen der ersten Austauschposition (A) und der zweiten Austauschposition (B) bewegt werden kann.

9. Verpackungsmaschine (12) nach Anspruch 5, 6 oder 7, die zwei Übergabeeinrichtungen (23), die alternativ verwendet werden können und die bei der ersten Austauschposition (A) bzw. bei der zweiten Austauschposition (B) angeordnet sind, aufweist.

10. Verpackungsmaschine (12) nach einem der Ansprüche 1 bis 4, wobei ein Zufuhrrad (17; 20) beweglich montiert ist, derart, dass seine Relativposition in Bezug auf das andere Zufuhrrad (20; 17) geändert werden kann, um die Position der Übergabestation (S3) entlang ihres eigenen Zufuhrpfades (P1; P2) zu ändern.

11. Verpackungsmaschine (12) nach Anspruch 10, wobei das bewegliche Zufuhrrad (17; 20) derart ausgelegt ist, dass es senkrecht zu seiner eigenen Drehachse (18; 21) verschoben wird.

12. Verpackungsmaschine (12) nach Anspruch 11, die ein Gleitstück aufweist, das derart montiert ist, dass es entlang einer festen Führung gleitet und mindestens ein Lager, an dem eine Welle des beweglichen Zufuhrrades (17; 20) in einer drehbaren Weise montiert ist, trägt.

13. Verpackungsmaschine (12) nach Anspruch 10, 11 oder 12, wobei die Bewegung des beweglichen Zufuhrrades (17; 20) die Position der Eingabestation (S1), die Position der Ausgabestation (S2) und die Position der Übergabestation (S3) in Bezug auf einen Rahmen (24) der Verpackungsmaschine (12) nicht ändert.

14. Verpackungsmaschine (12) nach Anspruch 10, 11 oder 12, wobei die Bewegung des beweglichen Zufuhrrades (17; 20) die Position der Übergabestation (S3) in Bezug auf einen Rahmen (24) der Verpackungsmaschine (12) ändert.

15. Verpackungsmaschine (12) nach Anspruch 14, wobei eine zentrale Trommel des beweglichen Zufuhrrades (17; 20) durch eine weitere zentrale Trommel mit einem verschiedenen Durchmesser ersetzt werden kann, um die Position der Eingabestation (S1) oder die Position der Ausgabestation (S2) in Bezug auf einen Rahmen (24) der Verpackungsmaschine (12) nicht zu ändern.

16. Einwickelverfahren für die Herstellung einer Packung (1) von Tabakwaren, die eine Innenumhüllung (3), die eine Gruppe (4) von Tabakwaren aufweist, und einen Außenbehälter (2), der die Innenumhüllung (3) aufnimmt, umfasst; wobei das Einwickelverfahren die folgenden Schritte umfasst:
Herstellen der Innenumhüllung (3) um die Gruppe (4) von Tabakwaren in einer ersten Einwickeleinheit (14) durch Falten einer Umwicklung (7; 9);
Herstellen des Außenbehälters (2) um die Innenumhüllung (3) in einer zweiten Einwickeleinheit (15) durch Falten eines Zuschnitts (10; 45); und
Zuführen der Innenumhüllung (3) von der ersten Einwickeleinheit (14) zur zweiten Einwickeleinheit (15) mittels einer Zufuhreinheit (16), die die Innenumhüllung (3) von der ersten Einwickeleinheit (14) in einer Eingabestation (S1) aufnimmt und die Innenumhüllung (3) in einer Ausgabestation (S2) zur zweiten Einwickeleinheit (15) freigibt; wobei
die Zufuhreinheit (16) Folgendes umfasst: ein erstes Zufuhrrad (17), das sich um eine erste Drehachse (18) dreht und das mindestens eine erste Tasche (19) trägt, die auf einem ersten Zufuhrpfad (P1) vorrückt und ausgelegt ist, in der Eingabestation (S1) die Innenumhüllung (3) aufzunehmen; ein zweites Zufuhrrad (20), das sich um eine zweite Drehachse (21) dreht und das mindestens eine zweite Tasche (22) trägt, die auf dem zweiten Zufuhrpfad (P2) vorrückt und ausgelegt ist, die Innenumhüllung (3) in der Ausgabestation (S2) freizugeben; und eine Übergabeeinrichtung (23), die in einer Übergabestation (S3) angeordnet ist, um die Innenumhüllung (3) von der ersten Tasche (19) zur zweiten Tasche (22) zu übergeben; und
das Einwickelverfahren **dadurch gekennzeichnet ist, dass** es, wenn die Verpackungsmaschine (12) zum Stillstand gebracht wird, den weiteren Schritt des Änderns der Position der Übergabestation (S3) entlang des erste Zufuhrpfades (P1) und/oder entlang des zweiten Zufuhrpfades (P2) umfasst, um somit die Länge des ersten Zufuhrpfades (P1) oder des zweiten Zufuhrpfades (P2) zu ändern und um die Orientierung, die der Innenumhüllung (3) gegeben wird, während sie sich durch die Zufuhreinheit (16) bewegt, zu ändern.

## Revendications

1. Machine d'emballage (12) pour la production d'un paquet (1) d'articles de tabac comprenant un emballage interne (3) contenant un groupe (4) d'articles de tabac et un contenant externe (2), qui loge l'emballage interne (3) ; la machine d'emballage (12) comprend :
une première unité d'enveloppement (14) pour créer l'emballage interne (3) autour du groupe (4) d'articles de tabac en pliant une enveloppe (7 ; 9) ;
une deuxième unité d'enveloppement (14) pour créer le contenant externe (2) autour de l'emballage interne (3) en pliant une découpe à plat (10 ; 45) ; et
une unité de distribution (16) pour recevoir l'emballage interne (3) de la première unité d'enveloppement (14) dans une station d'entrée (S1) et libérer l'emballage interne (3) jusqu'à la deuxième unité d'enveloppement (15) dans une station de sortie (S2) ;
l'unité de distribution (16) comprenant : une première roue de distribution (17), apte à tourner autour d'un premier axe de rotation (18) et qui supporte au moins une première poche (19), configurée pour progresser le long d'une première trajectoire de distribution (P1) et est conçue pour recevoir l'emballage interne (3) dans la station d'entrée (S1) ; une deuxième roue de distribution (20) apte à tourner autour d'un deuxième axe de rotation (21) et qui supporte au moins une deuxième poche (22), configurée pour progresser le long d'une deuxième trajectoire de distribution (P2) et est conçue pour libérer l'emballage interne (3) dans la station de sortie (S2) ; et un dispositif de transfert (23), qui est agencé dans une station de transfert (S3) pour transférer l'emballage interne (3) de la première poche (19) à la deuxième poche (22) ;
la machine d'emballage (12) est **caractérisée en ce que**, lorsque la machine d'emballage (12) est amenée à un arrêt, la position de la station de transfert (S3) le long de la première trajectoire de distribution (P1) et/ou le long de la deuxième trajectoire de distribution (P2) peut être modifiée en agençant ledit dispositif de transfert (23) sur une position d'échange différente, modifiant ainsi la longueur de la première trajectoire de distribution (P1) et/ou de la deuxième trajectoire de distribution (P2), et afin de modifier l'orientation donnée à l'emballage interne (3) lorsqu'il se déplace à travers l'unité de distribution (16) .

2. Machine d'emballage (12) selon la revendication 1, dans laquelle, dans une roue de distribution (17 ; 20), la poche (19 ; 22) est orientée de manière radiale par rapport à l'axe de rotation (18 ; 21) correspondant et, dans l'autre roue de distribution (20 ; 17), la poche (22 ; 19) est orientée de manière tangentielle par rapport à l'axe de rotation (21 ; 18) correspondant.

3. Machine d'emballage (12) selon la revendication 2, dans laquelle :
chaque poche (19 ; 22) présente une section rectangulaire ayant un côté long et un côté court ; et
dans une roue de distribution (17 ; 20), le côté long de la poche (19 ; 22) est orienté de manière radiale par rapport à l'axe de rotation (18 ; 21) correspondant et, dans l'autre roue de distribution (20 ; 17), le côté long de la poche (22 ; 19) est orienté de manière tangentielle par rapport à l'axe de rotation (21 ; 18) correspondant.

4. Machine d'emballage (12) selon la revendication 2 ou 3, dans laquelle, dans la première roue de distribution (17), la première poche (19) est orientée de manière radiale par rapport au premier axe de rotation (18) et, dans la deuxième roue de distribution (20), la deuxième poche (22) est orientée de manière tangentielle par rapport au deuxième axe de rotation (21).

5. Machine d'emballage (12) selon l'une des revendications 1 à 4, dans laquelle la station de transfert (S3) peut indifféremment être placée dans une première position d'échange (A), dans laquelle la première poche (19) de la première roue de distribution (17) et la deuxième poche (22) de la deuxième roue de distribution (20) sont alignées, ou dans une deuxième position d'échange (B), qui est différente et distincte de la première position d'échange (A), et dans laquelle la première poche (19) de la première roue de distribution (17) et la deuxième poche (22) de la deuxième roue de distribution (20) sont alignées.

6. Machine d'emballage (12) selon la revendication 5, dans laquelle une roue de distribution (17) chevauche en partie l'autre roue de distribution (20), de manière que, dans chaque position d'échange (A, B), les deux poches (19, 22) se chevauchent et soient alignées.

7. Machine d'emballage (12) selon la revendication 6, dans laquelle :
la première roue de distribution (17) comprend une pluralité de premières poches (19) ;
la deuxième roue de distribution (20) comprend une pluralité de deuxièmes poches (22) ; et
dans chaque position d'échange (A, B), une première poche (19) de la première roue de distribution (17) chevauche une deuxième poche (22) de la deuxième roue de distribution (20) et est alignée avec elle.

8. Machine d'emballage (12) selon la revendication 5, 6 ou 7, dans laquelle le dispositif de transfert (23) peut être déplacé entre la première position d'échange (A) et la deuxième position d'échange (B).

9. Machine d'emballage selon la revendication 5, 6 ou 7 et comprenant deux dispositifs de transfert (23), qui peuvent être utilisés tour à tour et sont agencés dans la première position d'échange (A) et dans la deuxième position d'échange (B), respectivement.

10. Machine d'emballage selon l'une des revendications 1 à 4, dans laquelle une roue de distribution (17 ; 20) est montée mobile afin de modifier sa position relative par rapport à l'autre roue de distribution (20 ; 17), afin de modifier la position de la station de transfert (S3) le long de sa propre trajectoire de distribution (P1 ; P2).

11. Machine d'emballage (12) selon la revendication 10, dans laquelle la roue de distribution mobile (17 ; 20) est conçue pour avoir une translation perpendiculaire à son propre axe de rotation (18 ; 21).

12. Machine d'emballage (12) selon la revendication 11 et comprenant une coulisse, qui est montée de manière à coulisser le long d'un guide fixe et supporte au moins un palier, sur lequel un arbre de la roue de distribution mobile (17 ; 20) est monté de manière rotative.

13. Machine d'emballage (12) selon la revendication 10, 11 ou 12, dans laquelle le mouvement de la roue de distribution mobile (17 ; 20) ne modifie pas la position de la station d'entrée (S1), la position de la station de sortie (S2) et la position de la station de transfert (S3) relativement à un châssis (24) de la machine d'emballage (12) .

14. Machine d'emballage (12) selon la revendication 10, 11 ou 12, dans laquelle le mouvement de la roue de distribution mobile (17 ; 20) modifie la position de la station de transfert (S3) relativement à un châssis (24) de la machine d'emballage (12).

15. Machine d'emballage (12) selon la revendication 14, dans laquelle un tambour central de la roue de distribution mobile (17 ; 20) peut être remplacé par un autre tambour central de diamètre différent, afin de ne pas modifier la position de la station d'entrée (S1) ou la position de la station de sortie (S2) relativement à un châssis (24) de la machine d'emballage (12).

16. Procédé d'enveloppement pour la production d'un paquet (1) d'articles de tabac comprenant un emballage interne (3) contenant un groupe (4) d'articles de tabac et un contenant externe (2), qui loge l'emballage interne (3) ; le procédé d'enveloppement comprenant les étapes qui consistent à :
créer l'emballage interne (3) autour du groupe (4) d'articles de tabac dans une première unité d'enveloppement (14) en pliant une enveloppe (7 ; 9) ;
créer le contenant externe (2) autour de l'emballage interne (3) dans une deuxième unité d'enveloppement (15) en pliant une découpe à plat (10 ; 45) ; et
distribuer l'emballage interne (3) de la première unité d'enveloppement (14) à la deuxième unité d'enveloppement (15) au moyen d'une unité de distribution (16), qui reçoit l'emballage interne (3) de la première unité d'enveloppement (14) dans une station d'entrée (S1) et libère l'emballage interne (3) jusqu'à la deuxième unité d'enveloppement (15) dans une station de sortie (S2) ;
l'unité de distribution (16) comprenant : une première roue de distribution (17), qui tourne autour d'un premier axe de rotation (18) et supporte au moins une première poche (19), qui progresse le long d'une première trajectoire de distribution (P1) et est conçue pour recevoir l'emballage interne (3) dans la station d'entrée (S1) ; une deuxième roue de distribution (20), qui tourne autour d'un deuxième axe de rotation (21) et supporte au moins une deuxième poche (22), qui progresse le long d'une deuxième trajectoire de distribution (P2) et est conçue pour libérer l'emballage interne (3) dans la station de sortie (S2) ; et un dispositif de transfert (23) qui est agencé dans une station de transfert (S3) pour transférer l'emballage interne (3) de la première poche (19) à la deuxième poche (22) ;
le procédé d'enveloppement est **caractérisé en ce qu'**il comprend, lorsque la machine d'emballage (12) est amenée à un arrêt, l'étape supplémentaire de modification de la position de la station de transfert (S3) le long de la première trajectoire de distribution (P1) et/ou le long de la deuxième trajectoire de distribution (P2), ce qui modifie la longueur de la première trajectoire de distribution (P1) ou de la deuxième trajectoire de distribution (P2) et afin de modifier l'orientation donnée à l'emballage interne (3) lorsqu'il se déplace à travers l'unité de distribution (16).
